# EUROPEAN PATENT APPLICATION

(11) **EP 3 677 367 A1**
(43) Date of publication of application: **08.07.2020**
(21) Application number: 19150309.3
(22) Date of filing: 04.01.2019
(51) Int. Cl.: B23B 51/02

(54) **AN INDEXABLE CUTTING INSERT, A TOOL BODY OF A DRILLING TOOL AND A DRILLING TOOL**

(71) Applicant: WALTER AG, 72072 Tübingen (DE)
(72) Inventor: JUNG, Alexander, DE-72127 KUSTERDINGEN (DE); DAUB, Jürgen, D-72108 Rottenburg (DE)
(74) Representative: Sandvik

(57) **Abstract**

The present invention relates to an indexable cutting insert (3) for mounting in a jaw (11) of a tool body (2) of a drilling tool (1), which jaw comprises two driver arms (12, 13), the cutting insert being generally defined by a top surface, a bottom surface, and circumferential surfaces extending between the top surface and the bottom surface, the cutting insert comprising a central longitudinal axis extending from a first centre position to a second centre position, wherein the cutting insert, in the longitudinal direction, has a pointed shape towards the first centre position and towards the second centre position, a first pair of main cutting edges, which extends from the first centre position in opposite radial directions to a cutting corner at a periphery position of the cutting insert, and a second pair of main cutting edges, which extends from the second centre position in opposite radial directions to a cutting corner at a peripheral position of the cutting insert, wherein the top surface and the bottom surface each comprise two concave chip transferring depressions, two radially outer contact surfaces and a radially inner contact surface, wherein each of the chip transferring depressions is delimited by an adjacent radially inner contact surface and an adjacent radially outer contact surface, the radially outer contact surfaces and the radially inner contact surfaces are arranged for, when the cutting insert is mounted in the drilling tool, supporting the cutting insert in a circumferential direction against the driver arms, and the first pair of main cutting edges, the second pair of main cutting edges, the radially outer contact surfaces and the radially inner contact surfaces are arranged such that the cutting insert is mountable in two different index positions in the jaw, wherein, in each index position, either the first or the second pair of main cutting edges is in a cutting position.

## Description

### TECHNICAL FIELD

The present disclosure relates to an indexable cutting insert for mounting in a jaw of a drilling tool, which jaw comprises two driver arms, the cutting insert being generally defined by a top surface, a bottom surface, and circumferential surfaces extending between the top surface and the bottom surface, the cutting insert comprising a central longitudinal axis extending from a first center position to a second center position, wherein the cutting insert, in the longitudinal direction, has a pointed shape towards the first center position and towards the second center position, a first pair of main cutting edges, which extends from the first center position in opposite radial directions to a cutting corner at a periphery position of the cutting insert, and a second pair of main cutting edges, which extends from the second center position in opposite radial directions to a cutting corner at a peripheral position of the cutting insert.

The present disclosure also relates to a tool body of a drilling tool having an axis of rotation, the tool body comprising a shaft connecting a first and a second end and comprising two chip flutes, a mounting section at the first end of the shaft for connecting the tool body to a spindle of a machine tool, and a jaw at the second end of the shaft for accommodating an indexable cutting insert.

Further, the present disclosure relates to a drilling tool comprising an indexable cutting insert and a tool body.

### BACKGROUND

Tools for chip removing machining, in particular drilling tools, wherein the chips are cut by geometrically defined edges, namely cutting edges, are frequently used in machining of metal work pieces. For many applications, the drilling tool is a multicomponent drilling tool comprising a tool body having an insert seat and a cutting insert mounted in the insert seat. By providing a multicomponent drilling tool, the cutting edges which are crucial for the drilling operation can be replaced once a considerable wear of the cutting edges has occurred.

A multicomponent drilling tool also allows the use of an insert formed from an expensive hard material, such as a cemented carbide, ceramic or the like. The tool body of the drilling tool may be formed from a less expensive material having a lower hardness. US 4,047,826 discloses a multicomponent drilling tool comprising an elongated tool body with an axial slot near one end thereof, wherein the slot forms an insert seat. A generally hexagonal cutting insert of sintered tungsten carbide or high-speed steel is placed in the slot and received in a V-shaped abutment surface formed in the bottom of the slot. A clamping screw extends through a hole in the cutting insert and serves to clamp the slot closed upon opposite sides of the insert.

However, existing drilling tools of the afore-mentioned type may provide insufficient chip transferring properties leading to a reduced cutting speed and even to a reduced surface quality of the drilled hole.

### SUMMARY

It is an object of the present disclosure to provide a cutting insert for mounting in a jaw of a tool body of a drilling tool, a tool body of a drilling tool and a drilling tool having improved chip transferring properties. Furthermore, it is an object of the present disclosure to provide a cutting insert, a tool body and a drilling tool having an improved service life. It is yet a further object of the present disclosure to provide a cutting insert, a tool body and a drilling tool having improved cutting properties. It is also an object of the present disclosure to provide a cutting insert and a tool body of a drilling tool having a high positioning precision of the cutting insert at the tool body. Furthermore, it is desired that the cutting insert and the tool body improve the torque transmission from the tool body to the cutting insert.

At least one of the above-mentioned objects is achieved by the invention as defined in the claims.

According to a first aspect of the present disclosure, at least one of the above objects is addressed by an indexable cutting insert for mounting in a jaw of a tool body of a drilling tool, which jaw comprises two driver arms, the cutting insert being generally defined by a top surface, a bottom surface, and circumferential surfaces extending between the top surface and the bottom surface, the cutting insert comprising a central longitudinal axis extending from a first centre position to a second centre position, wherein the cutting insert, in the longitudinal direction, has a pointed shape towards the first centre position and towards the second centre position, a first pair of main cutting edges, which extends from the first centre position in opposite radial directions to a cutting corner at a periphery position of the cutting insert, and a second pair of main cutting edges, which extends from the second centre position in opposite radial directions to a cutting corner at a peripheral position of the cutting insert, wherein the top surface and the bottom surface each comprise two concave chip transferring depressions, two radially outer contact surfaces and a radially inner contact surface, wherein each of the chip transferring depressions is delimited by an adjacent radially inner contact surface and an adjacent radially outer contact surface, the radially outer contact surfaces and the radially inner contact surfaces are arranged for, when the cutting insert is mounted in the drilling tool, supporting the cutting insert in a circumferential direction against the driver arms, and the first pair of main cutting edges, the second pair of main cutting edges, the radially outer contact surfaces and the radially inner contact surfaces are arranged such that the cutting insert is mountable in two different index positions in the jaw, wherein, in each index position, either the first or the second pair of main cutting edges is in a cutting position.

In the sense of the present disclosure, the term radial denotes a direction perpendicular to the central longitudinal axis. Furthermore, in the sense of the present disclosure, the term axial denotes a direction parallel to the central longitudinal axis. The central longitudinal axis is identical to the axis of rotation of the drilling tool, when the cutting insert is mounted at the tool body and when the drilling tool is in use. A central plane in the sense of the present disclosure is a plane which includes the central longitudinal axis and thus the first center position as well as the second center position. The central plane is located half way between the top surface and the bottom surface.

It is a concept of the cutting insert according to the present disclosure to provide a cutting insert which is indexable such that it has two pairs of main cutting edges which can be selectively brought into engagement with a workpiece in order to improve the overall service life of the insert. At the same time, by providing two concave chip transferring depressions on each of the top surface and the bottom surface, the cutting insert has improved chip transferring properties.

A complication associated with chip transferring depressions is that, due to their concave structure, they cannot be used as a contact surface for engaging a corresponding abutment surface of a tool body when the cutting insert is mounted at the tool body. Consequently, the present disclosure suggests providing the cutting insert with radially outer and radially inner contact surfaces, wherein each of the chip transferring depressions is delimited by one radially outer contact surface and the radially inner contact surface.

On both the top surface and the bottom surface, the respective chip transferring depression are positioned between a radially outer contact surface and a radially inner contact surface, which, when the cutting insert is mounted in the jaw of the tool body, provide an improved torque transmission from the tool body to the cutting insert as well as an improved positioning precision.

In an embodiment of the present disclosure, there is only one single radially inner contact surface on the top surface and one single radially inner contact surface on the bottom surface. However, there may be embodiments, wherein the top surface and the bottom surface each comprise a plurality of radially inner contact surface, e.g. two radially inner contact surfaces.

In an embodiment of the present disclosure, two chip transferring depressions extend in an axial direction in parallel over the top surface and two chip transferring depressions extend in an axial direction in parallel over the bottom surface. They may extend from one axially facing side of the cutting insert to the other axially facing side of the cutting insert.

In an embodiment of the present disclosure, the top surface and the bottom surface are identical in a top view.

Although the top surface and the bottom surface may have a surface topology deviating from a planar surface, they can be described to be in general parallel to each other. This way the indexable insert has a basic shape of a plate with the distance between the top surface and the bottom surface being smaller than the extensions of the top surface and the bottom surface in at least one direction.

In an embodiment of the present disclosure, the top surface and the bottom surface each have a hexagonal basic shape in a top view.

In an embodiment of the present disclosure, the cutting insert is a cutting insert for metal cutting. In an embodiment of the present disclosure, the cutting insert has a web thinning at the first and second center positions, i.e. the web, or core, of the drilling tool with mounted cutting insert decreases towards the active point at the first or second center position. This is one feature that renders the drill suitable for metal cutting.

A radial distance between the first center position and a therewith associated cutting corner at a periphery position defines a nominal radius of the cutting insert and thus, when the cutting insert is mounted in the tool body, of the drilling tool. The same holds true for a radial distance between the second center position and an associated cutting corner at a periphery position on the opposite side of the cutting insert.

In an embodiment of the present disclosure, the cutting insert comprises a hard material such as a cemented carbide, a ceramic or the like.

The contact surfaces according to the present disclosure may have a variety of topologies and orientations. In an embodiment of the present disclosure, each of the radially outer contact surfaces and each of the radially inner contact surfaces on the top and bottom surfaces are planar. Planar surfaces may be manufactured with high precision and a high yield even in mass production of the cutting inserts.

In an embodiment of the present disclosure, all the radially outer contact surfaces and all the radially inner contact surfaces are parallel to each other. In an embodiment, at least the radially outer contact surfaces on the top surface are located in a common plane and the radially outer contact surfaces on the bottom surface are located in a common plane. Planar surfaces in a common plane provide for an easy mounting and dismounting of the cutting insert in the tool body.

In an embodiment of the present disclosure, the radially outer contact surfaces and the radially inner contact surface on the top surface are located in a common plane and the radially outer contact surfaces and the radially inner contact surface on the bottom surface are located in a common plane. This way, the contact surfaces on each of the top surface and the bottom surface may be manufactured, e.g. by grinding, in a single manufacturing step. In embodiments, all contact surfaces on the top surface are located in a common plane and all contact surfaces on the bottom surface are located in a common plane.

It is desired that the cutting insert can be mounted in a stable way between the jaws of the tool body, i.e. in the insert seat, and that chip transportation can be enhanced simultaneously. Thus, it is advantageous to optimize the design of the top and bottom surfaces. The size, in particular the width in a radial direction, of the contact surfaces has to be balanced against the size, in particular the width in a radial direction, of the chip transferring depressions in order to achieve these goals in an optimal manner.

In an embodiment of the present disclosure, the area covered by the two chip transferring depressions either on the top surface or on the bottom surface amounts to a fraction in a range from 40% to 60% when compared to an overall area of the top surface or of the bottom surface. In embodiments, the overall area of the top surface or of the bottom surface is formed by a surface area consisting of the radially inner and outer contact surfaces and the chip transferring depressions. In an embodiment, this fraction is in a range from 45% to 55%. In an embodiment, this fraction is in a range from 50% to 54%.

In an embodiment of the present disclosure, when projected onto the central plane, the width of the two chip transferring depressions in relation to the overall width of the contact surfaces is in a range from 45% to 55%. In an embodiment of the present disclosure, this ratio is in a range from 50% to 54%.
In an embodiment of the present disclosure, a line of intersection between a radially outer contact surface and an adjacent chip transferring depression, when projected onto the central plane including the central longitudinal axis, forms an angle with the central longitudinal axis in a range from 0° to 5°.

This angle provides an effective chip transfer in a chip space formed together by the cutting insert and the tool body. However, the selected angle still optimizes the area of the outer contact surfaces in order to provide a stable contact with the tool body. With an angle within this range, the contact surfaces will have their largest breadth close to the active cutting edge where support is need the most, while the chip space advantageously widens in the direction of chip transport.

In an embodiment of the present disclosure, a line of intersection between each radially inner contact surface and an adjacent chip transferring depression, when projected onto the central plane including the central longitudinal axis, forms an angle in a range from 0° to 5°. This has the corresponding advantageous effect.

The desired effect is also achieved in an embodiment provided with both these features. In such an embodiment the lines of intersection between the radially outer contact surfaces and the adjacent chip transferring depression and the lines of intersection between the radially inner contact surface and the adjacent chip transferring depressions are such that the width of the chip transferring depression in a radial direction increases in the axial direction away from the main cutting edge associated with the respective chip transferring depression. The main cutting edge associated with a chip transferring depression is the main cutting edge, which, when active, cuts chips which are transferred by the corresponding chip transferring depression.

In an embodiment, the cutting insert has a first 180° rotational symmetry about a first axis of symmetry, which first axis of symmetry is normal to the central plane including the central longitudinal axis and intersects the central longitudinal axis half way between the first centre position and the second centre position, and a second 180° rotational symmetry about the central longitudinal axis. The characteristics of symmetry of this embodiment of the cutting insert according to the present disclosure provide indexability of the cutting insert in an efficient way. This embodiment is also advantageous in that all cutting edges have corresponding shapes. For example, a first cutting edge in a first pair of cutting edges has the same shape as a second cutting edge in the same pair with respect to the directions of rotation. Also, the first pair of cutting edges have the same shape as the second pair of cutting edges when mounted in an active cutting index position. Similarly, all cutting edges are provided with contact surfaces of the same shape and location, and chip transferring depression of the same shape and location.

In other words, the cutting insert according to this embodiment has two twofold rotational symmetries, i.e. the first 180° rotational symmetry about the first axis of symmetry, and the second 180° rotational symmetry about the central longitudinal axis. In an embodiment, the first axis of symmetry extends through a center of the top surface and through a center of the bottom surface. In an embodiment, the first axis of symmetry is also perpendicular at least to the radially inner contact surfaces of the top surface and of the bottom surface. In an embodiment of the present disclosure, the indexable cutting insert has a third 180° rotational symmetry (twofold rotational symmetry) about a second axis of symmetry which is perpendicular to the first axis of symmetry and to the central longitudinal axis. The second axis of symmetry intersects the first axis of symmetry and the central longitudinal axis in a common point of intersection.

However, exact symmetry is not a prerequisite for the indexability. It could in some cases be desirable to design a cutting insert having different properties in the two index positions.

In an embodiment of the present disclosure, each of the main cutting edges is at least partly formed at an intersection between a chip surface and an axial surface, which axial surface forms an axial clearance surface when the main cutting edge is in the cutting position and an axial contact surface when the main cutting edge is in an inactive position. The chip surface is a part adjacent each main cutting edge of the top surface or the bottom surface. The cutting insert according to this embodiment has four axial surfaces, wherein each axial surface is associated with a main cutting edge. Depending on the indexing position of the cutting insert, the axial surface is either a clearance surface of an active main cutting edge, i.e. a cutting edge in engagement with a workpiece, or alternatively, an axial contact surface in contact with a complementary axial abutment surface of the tool body accommodating the cutting insert.

In an embodiment of the present disclosure, the axial surfaces of the cutting insert are planar surfaces.

In an embodiment, the axial clearance surface is a planar surface, wherein the plane of the axial clearance surface forms an angle with the central plane including the central longitudinal axis in a range from 75° to 82°, wherein the angle is measured in a plane perpendicular to the central plane. This angle between the central plane and the axial clearance surface is the smaller angle of the two angles formed by the axial clearance surface intersecting the central plane. Expressed in other words, the cutting insert according to this embodiment has a clearance angle in a range of 8° to 15°. The effective clearance angle between the surface of the workpiece machined by a main cutting edge and the clearance surface associated with this main cutting edge is slightly smaller.

While, from a cutting operational point of view, it may be desirable to have a larger clearance angle, the above clearance angle is still small enough to allow for an appropriate centering support of the cutting insert when the corresponding main cutting edges are inactive. In this position, the axial surfaces form axial contact surfaces that are in engagement with complementary axial abutment surfaces of the tool body.

In an embodiment of the present disclosure, the lines of intersection between each of the two axial surfaces associated with a pair of main cutting edges with the central plane form an angle between them which is larger than 90° and smaller than 180°. In an embodiment, this angle is in a range from 110° to 150°. In an embodiment this angle amounts to 120° or to 140°.

The chip transferring depressions at a cutting insert according to the present disclosure enhance the flow of chip in the axial direction of the drilling tool. In an embodiment of the present disclosure, the chip forming recess does not have chip forming structures like chip forming protrusions.

In a further embodiment of the present disclosure, in addition to the chip transferring depressions, chip forming recesses are provided in order to enhance chip forming, which in turn achieves an enhanced chip transferring process. Thus, in an embodiment of the present disclosure, a chip forming recess is provided in the top surface or in the bottom surface for each main cutting edge. The chip forming recess extends along the main cutting edge, wherein, along a first side, the chip forming recess is delimited by the main cutting edge, and, along a second side, is delimited at least partly by the radially outer contact surface and the chip transferring depression.

In an embodiment, this chip forming recess may also act as a chip breaking recess. The chip forming recess comprises for example an undulated surface, and/or protrusions and/or ridges on the surface of the chip forming recess surface, which act as chip breakers and/or chip formers.

In an embodiment of the present disclosure, a chip breaking step is formed at an intersection between the chip breaking recess and the radially outer contact surface and at an intersection between the chip forming recess and the chip transferring depression.

In an embodiment of the present disclosure, as seen in a plane perpendicular to the central plane and parallel to the central longitudinal axis, the chip forming recess is concavely curved.

A radial distance measured perpendicular to the central longitudinal axis between one of the cutting corners and the central longitudinal axis defines the nominal radius of the cutting insert. In an embodiment of the present disclosure, the circumferential surfaces comprise a first radial surface and a second radial surface, which, on a respective radial side of the cutting insert, extend from the cutting corner of one of the main cutting edges in the first pair of main cutting edges to the cutting corner of one of the main cutting edges in the second pair of main cutting edges, wherein each of the radial surfaces comprises a chamfer at each of their connections with the top surface and the bottom surface, so that any point on the radial surface has a radial distance from the longitudinal axis equal to or smaller than the nominal radius. This design avoids interference between parts of the cutting insert and the workpiece to be machined. The chamfers reduce the radial distance of parts of the cutting insert. These parts would without chamfers, when the cutting insert is in operation and rotating, be leading in front of to the cutting corner and could damage the work piece.

Surprisingly, the cutting insert achieves good machining results even if parts of the cutting insert have a radial distance from the central longitudinal axis equal to the nominal radius.

In an embodiment of the present disclosure, each chamfer has a leading edge at either a top surface or a bottom surface, and, a trailing edge at a main section of the radial surface. The leading edge and the trailing edge each have a constant radial distance from the central longitudinal axis, which constant radial distance is equal to the nominal radius, wherein the radial distance is measured perpendicular to the central longitudinal axis. Thereby, the leading edge as well as the trailing edge both support the cutting insert in the hole when the insert is rotated around the central longitudinal axis during operation of the drilling tool.

In an embodiment, the main section of the radial surface is a planar surface. In an embodiment, one or both of the leading edge and trailing edge is linear and parallel to the central longitudinal axis.

In an embodiment the chamfers have a planar surface. In an alternative embodiment the chamfers have a curved surface which is curved around the central longitudinal axis, wherein the radius of curvature is equal to the nominal radius. In this embodiment, during operation, the cutting insert is supported in the hole to be drilled by the four chamfers of the two radial surfaces, which, due to their radius being the nominal radius of the cutting insert, are in engagement with the sidewall of the hole to be drilled.

In an embodiment of the present disclosure, the cutting insert has at least one through hole for mounting the indexable cutting insert at a tool body of a drilling tool, the at least one through hole extending through the top surface and the bottom surface and from the front surface to the bottom surface.

In an embodiment, the cutting insert has a single through hole extending between the top surface and the bottom surface. In an embodiment, a longitudinal axis of this through hole is formed under an angle with respect to the central plane, wherein this angle is different from 90°. Through this tilted through hole a screw can be fed under an angle different from 90° with respect to the central plane through the cutting insert.

In an embodiment, the single through hole is essentially cylindrical or elliptical without providing a cone for engaging a screw head. Instead, the clamping of the cutting insert may be provided by narrowing the gap between the two driver arms of the tool body.

In an embodiment of the present disclosure the cutting insert comprises a single through hole, wherein the through hole is a long hole, wherein the extension of the long hole is smaller in a direction parallel to the central longitudinal axis than in a direction perpendicular to the central longitudinal axis.

In an alternative embodiment of the present disclosure, the cutting insert has two through holes. Each hole can extend between a chip transferring depression on the top surface and a chip transferring depression on the bottom surface. In an embodiment, the two through holes are formed as long holes.

In an embodiment, each of the two through holes has two conical or tapering sections starting at the bottom surface and at the top surface and narrowing towards the central plane of the cutting insert. These conical sections of each through hole serve to receive a conical or tapering head of a screw that can be inserted in the through hole for clamping the cutting insert in the insert seat of the tool body. In this embodiment, the cutting insert may be clamped by engagement of a screw head with a conical section of the through hole.

In an embodiment of the present disclosure where the holes are long holes, each of the two long holes has an extension in a direction parallel to the central longitudinal axis that is smaller than an extension in a direction perpendicular to the central longitudinal axis. Thereby, when the insert is mounted in an insert seat of a tool body, the mounting screws, which extend through the through holes, will not interfere with a centering, possibly a self-centering, motion of the cutting insert.

According to a second aspect of the present disclosure, at least one of the above-mentioned objects is addressed by a tool body of a drilling tool having an axis of rotation, the tool body comprising a shaft connecting a first end and a second end and comprising two chip flutes, a mounting section at the first end of the shaft for connecting the tool body to a spindle of a machine tool, and a jaw at the second end of the shaft for accommodating an indexable cutting insert, wherein the chip flutes extend to the jaw, wherein the jaw comprises a first driver arm and a second driver arm, wherein the jaw has at least a first torque transferring abutment surface and a second torque transferring abutment surface for abutting contact surfaces of an indexable cutting insert, wherein the first torque transferring abutment surface is a surface of the first driver arm, wherein the second torque transferring abutment surface is a surface of the second driver arm, wherein the first torque transferring abutment surface and the second torque transferring abutment surface extend parallel to the axis of rotation, and wherein the first torque transferring abutment surface and the second torque transferring abutment surface have surface normals pointing in opposite directions for supporting the contact surfaces of the cutting insert in a circumferential direction.

In an embodiment of the present disclosure, the first driver arm and the second driver arm each have a circumferential extension in a range from 45° to 100° or in a range from 50° to 95°. Expressed in other words, the two driver arms each occupy less than half the circumference of the tool body in order to partly expose the top surface and the bottom surface of a cutting insert accommodated in the jaw. Thus, surfaces of the cutting insert and of the driver arms together form a chip space in the beginning of the drilling tool, which chip space is then continued by the chip flutes extending in the tool body up to the insert seat.

In an embodiment, the chip flutes are spirally extending chip flutes.

In an embodiment of the present disclosure, a hole is provided in the first driver arm and in the second driver arm, which holes are aligned for receiving a single screw. The hole in the first driver arm is a through hole and the hole through the second driver arm is a through hole or a blind hole. The holes can both be threaded or only the hole in the second driver arm is threaded. The holes are provided in order to accommodate a clamping screw, which reaches through the through hole in the first driver arm and engages the thread of the hole in the second driver arm. In this embodiment, the screw is used for tightening a gap formed between the first driver arm and the second driver arm and for clamping a cutting insert between the two driver arms.

In an embodiment, the through hole is oriented at an angle with the torque transferring abutment surfaces of the driver arms. In an embodiment, the through hole forms an angle in a range of 50° to 60° with the torque transferring abutment surfaces of the driver arms and in an embodiment the angle is approximately 55°.

In an alternative embodiment, a first threaded hole is provided in the first driver arm and a second threaded hole is provided in the second driver arm, which holes extend beside each other for receiving one screw each. In an embodiment, the first through hole is perpendicular to the first torque transferring abutment surface and the second through hole is perpendicular to the second torque transferring abutment surface. In this embodiment, during operation, the two threaded holes of the tool body receive one screws each, wherein each screw extends through a corresponding hole in the cutting insert and secures the cutting insert in the jaw by their threaded ends engaging with corresponding threads in the holes.

In an embodiment of the present disclosure, the first and second torque transferring abutment surfaces are both planar surfaces.

In an embodiment of the present disclosure, the jaw, in addition to the first and second torque transferring abutment surfaces, comprises two axial abutment surfaces, wherein the two axial abutment surfaces are rotationally symmetrical about the axis of rotation and wherein the two axial abutment surfaces form an angle smaller than 180°.

In an embodiment, the two axial abutment surfaces form an angle larger than 90°. According to the present disclosure, the axial abutment surfaces provide an axial support of a cutting insert accommodated in the jaw, i.e. a support in a direction parallel to the axis of rotation (and thus parallel to the central longitudinal axis).

In an embodiment of the present disclosure, a relief for receiving the main cutting edges of a cutting insert accommodated in the jaw is provided between each of the axial abutment surfaces and their corresponding first or second torque transferring abutment surface.

According to a third aspect of the present disclosure, at least one of the above-mentioned objects is addressed by a drilling tool comprising the indexable cutting insert according to anyone of the embodiments of the present disclosure and the tool body according to anyone of the embodiments of the present disclosure, wherein the cutting insert is mounted in the jaw of the tool body, wherein the first torque transferring abutment surface of the jaw is in engagement with one of the two radially outer contact surfaces and with the radially inner contact surface of the top surface of the cutting insert, and wherein the second torque transferring abutment surface of the jaw is in engagement with one of the two radially outer contact surfaces and with the radially inner contact surface of the bottom surface of the cutting insert.

In an embodiment of the present disclosure, the tool body comprises two axial abutment surfaces, wherein the two axial abutment surfaces are in engagement with axial contact surfaces of the cutting insert.

In an embodiment of the present disclosure, the tool body comprises at least one threaded hole, wherein the cutting insert comprises at least one through hole, and wherein the tool comprises at least one screw, the screw extending through the through hole of the cutting insert and being fastened in the threaded hole.

In an embodiment of the drilling tool according to the present disclosure, a chip flute of the tool body, a chip transferring depression of the cutting insert and at least a radially outer contact surface of the top surface of the cutting insert together define a first chip space, wherein a chip flute of the tool body and a chip transferring depression and at least a radially outer contact surface of the bottom surface of the cutting insert together define a second chip space. These chip spaces are continued by the chip flutes in the tool body extending up to the jaw.

In embodiments, chip transferring depression of the cutting insert connects to a curved surface at the driver arms. This curved surface is located on the trailing side of the driver arms, while the torque transferring abutment surface is located on a leading side. The curved surface can in embodiment be part of the chip space.

In an embodiment of the drilling tool according to the present disclosure, the radially inner contact surface on the top surface of the cutting insert extends beyond the first abutment surface of the tool body so that a part of the radially inner contact surface is part of the first chip space, and wherein the radially inner contact surface on the bottom surface of the cutting insert extends beyond the second abutment surface of the tool body so that a part of the radially inner contact surface is part of the second chip space. Expressed in other words, in this embodiment a part of the radially inner contact surface on the top surface of the cutting insert and a part of the radially inner contact surface on the bottom surface of the cutting insert are exposed to the chips cut by the main cutting edges. In this embodiment, formation of volumes between the cutting insert and the jaw of the tool body which could form traps for chips is avoided.

In an embodiment of the present disclosure, the radial width of the radially inner contact surface when projected onto the central plane is larger than the web diameter of the tool body at the jaw.

In an embodiment of the present disclosure, the cutting insert is secured in the jaw of the tool body by two mounting screws. Each of the mounting screws reaches through a through hole in the cutting insert, wherein the heads of the screws engage the walls of the through holes. In an embodiment, the through holes in the cutting insert as well as the mounting screws are arranged such that in a tightened condition of each of the screws the screw heads do not extend beyond the top surface or the bottom surface of the cutting insert. This reduces the risk of chips being trapped by the mounting screws or between the mounting screws and the cutting insert.

### BRIEF DESCRIPTION OF THE FIGURES

Further advantages, features and applications of the present disclosure will become apparent from the following description of embodiments and the attached figures. The foregoing as well as the following detailed description of embodiments of the present disclosure will be better understood when read in conjunction with the attached figures. It should be understood that the depicted embodiments are not limited to the precise arrangements and instrumentalities shown. Unless otherwise indicated, like reference numerals in different figures refer to like or corresponding parts.
- Figure 1: is a side view of a drilling tool according to a first embodiment of the present disclosure with a tool body, an indexable cutting insert as well as two mounting screws.
- Figure 2: is a side view of the drilling tool of Figure 1 rotated by 90°.
- Figure 3: is a top view onto the tip of the drilling tool of Figures 1 and 2.
- Figure 4: is an isometric top view of the drilling tool of Figures 1 to 3.
- Figure 5: is an isometric top view of the drilling tool of Figure 4 rotated by 90°.
- Figure 6: is an exploded isometric top view of the drilling tool of Figures 1 to 5 in an orientation corresponding to the orientation of Figure 5.
- Figure 7: is a side view of the tool body of the drilling tool of Figures 1 to 6 with the same orientation as the drilling tool of Figure 2.
- Figure 8: is an isometric top view of the tool body of Figure 7 in the same orientation as in Figure 5.
- Figure 9: is a top view onto the tip of the tool body of Figure 7.
- Figure 10 a): is an isometric top view of the cutting insert of the drilling tool of Figures 1 to 6 in an orientation corresponding to the orientation of Figure 4.

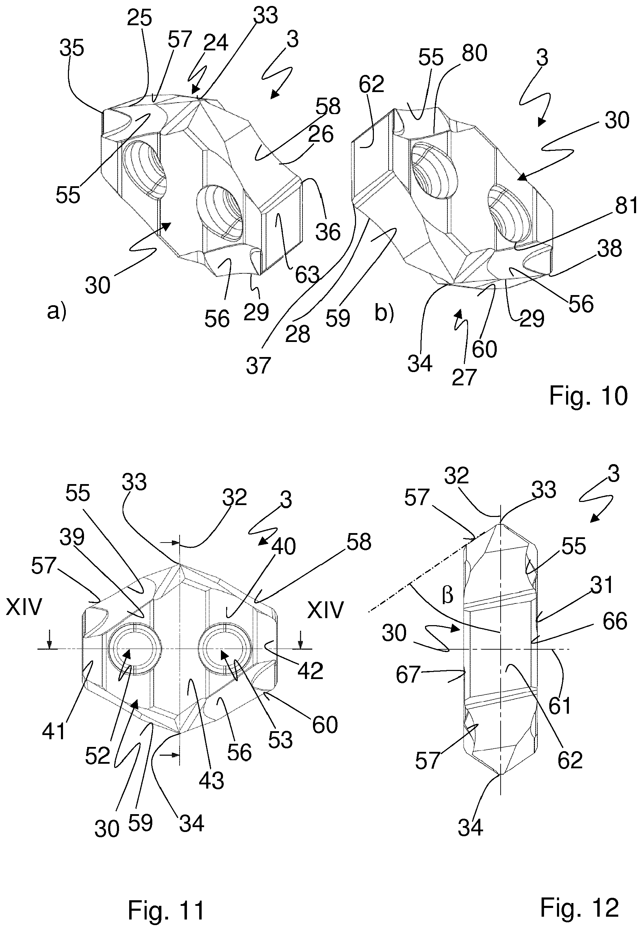

- Figure 10 b): is an isometric bottom view of the cutting insert of Figure 10 a).
- Figure 11: is a side view of the top surface of the cutting insert of Figures 10 a) and 10 b).
- Figure 12: is a side view of the radial surface of the cutting insert of Figures 10 and 11 an orientation rotated by 90° when compared to Figure 11.

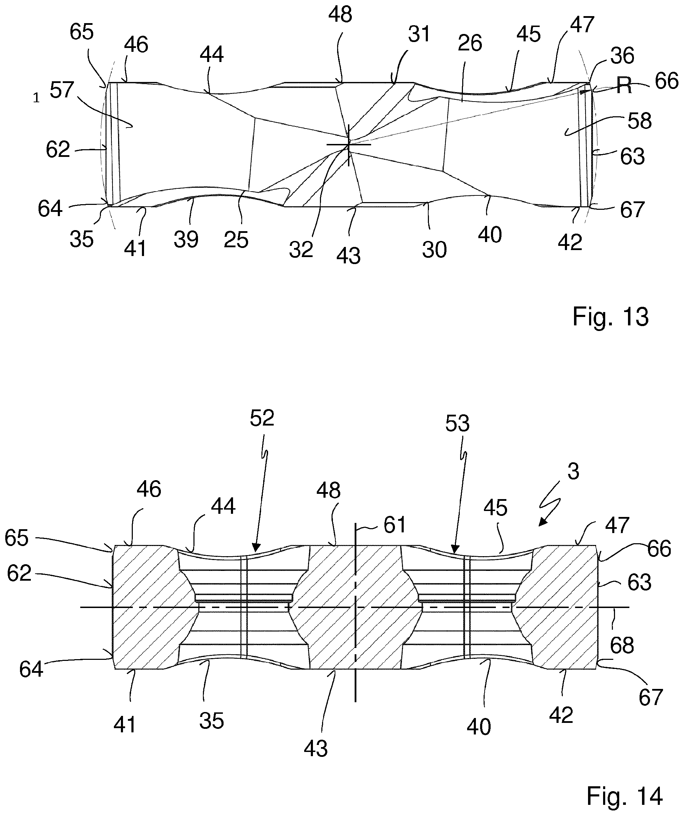

- Figure 13: is a top view of the cutting insert according to Figures 10 to 12 with the insert rotated by 90° when compared to Figure 11.
- Figure 14: is a cross-sectional view of the cutting insert along line XIV-XIV of Figure 11.

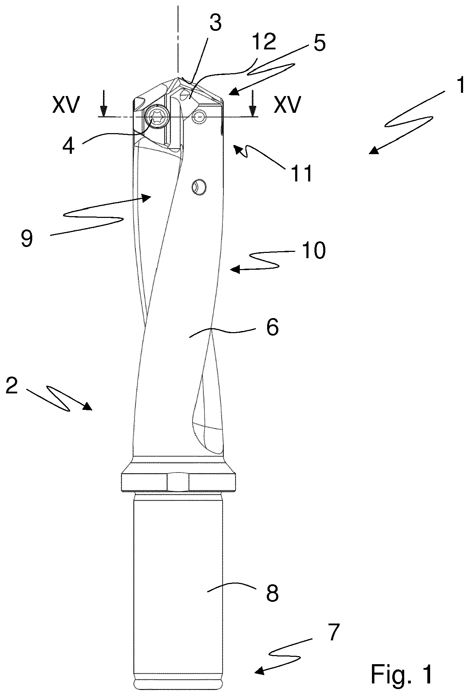

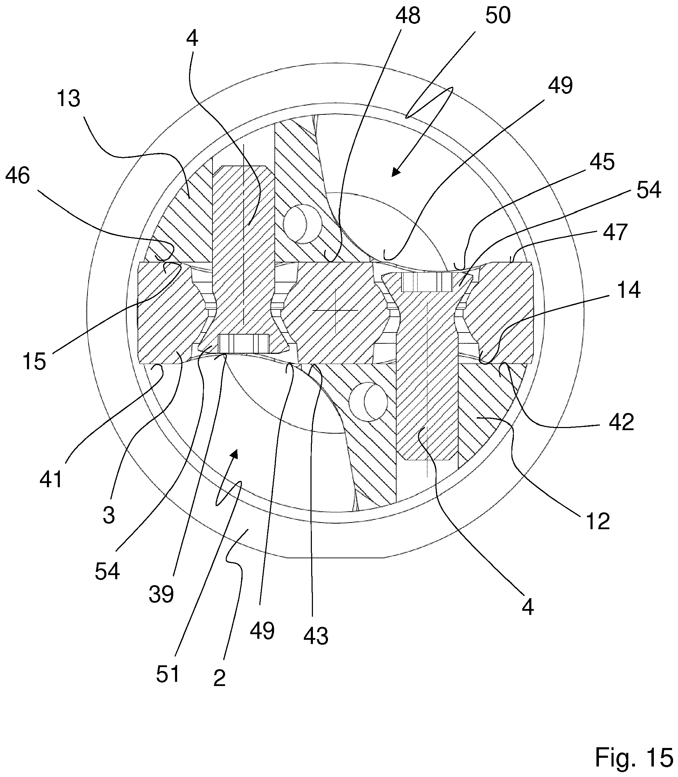

- Figure 15: is a cross-sectional view through the cutting tool along line XV-XV of Figure 1.

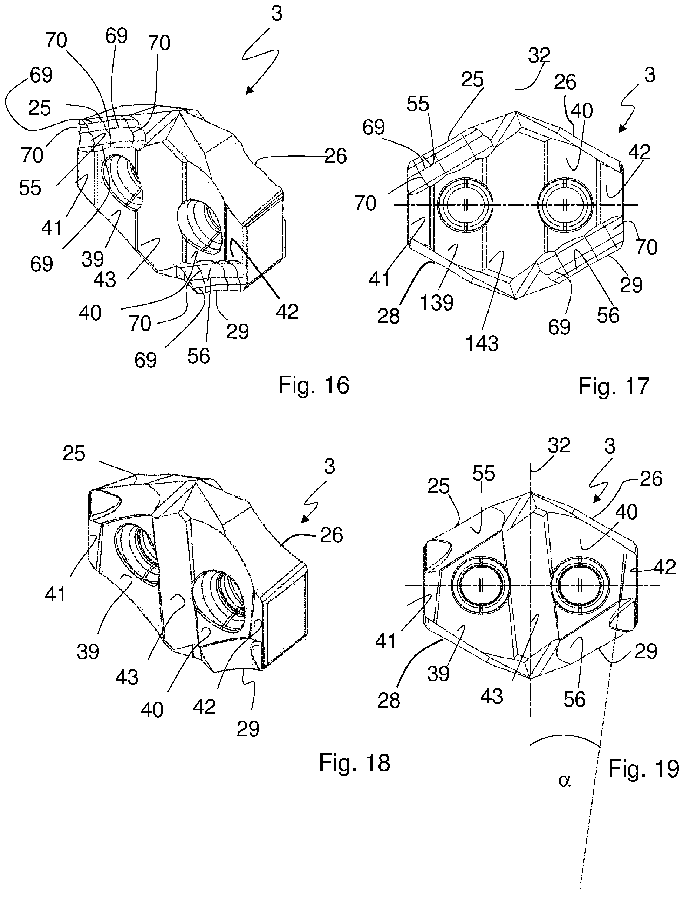

- Figure 16: is an isometric top view of a further embodiment of a cutting insert according to the present disclosure.
- Figure 17: is a side view of the top surface of the cutting insert of Figure 16.
- Figure 18: is an isometric top view of a further embodiment of a cutting insert according to the present disclosure.
- Figure 19: is a side view of the top surface of the cutting insert of Figure 18.

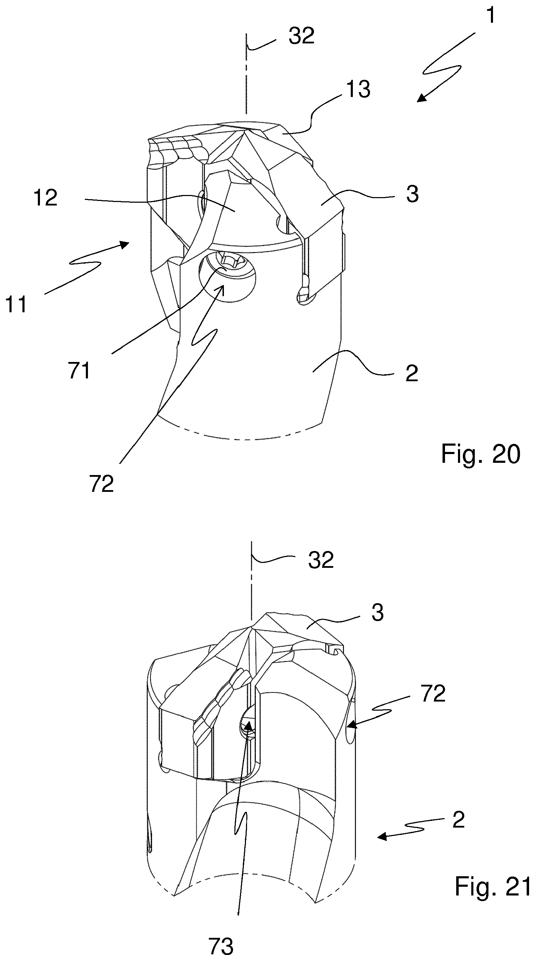

- Figure 20: is a broken away isometric top view of a drilling tool according to a further embodiment of to the present disclosure.
- Figure 21: is a broken away isometric top view of the drilling tool of Figure 20 rotated by 90°.

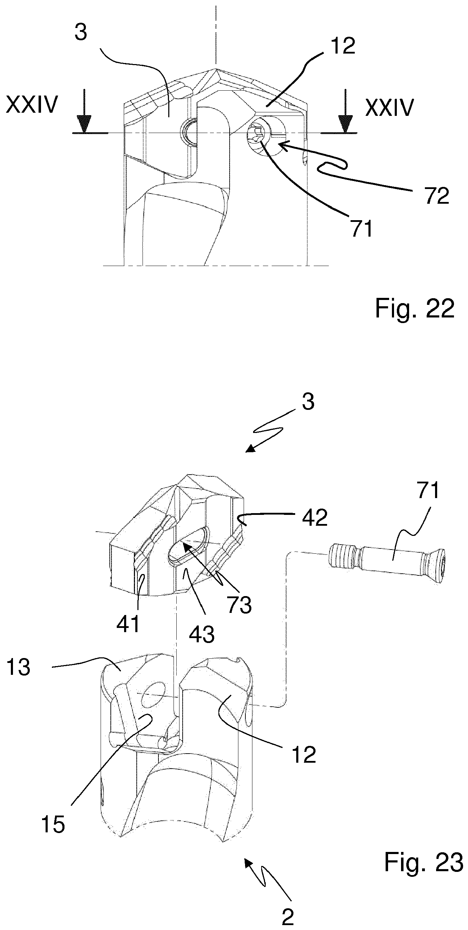

- Figure 22: is a broken away side view of the drilling tool of Figures 20 and 21.
- Figure 23: is a broken away isometric exploded view of the drilling tool of Figures 20 to 22.

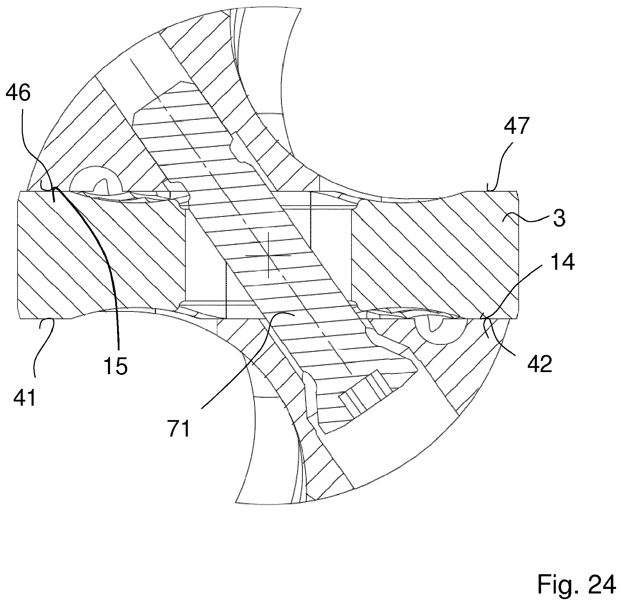

- Figure 24: is as cross-sectional view of the drilling tool of Figures 20 to 23 along line XXIV-XXIV of Figure 22.

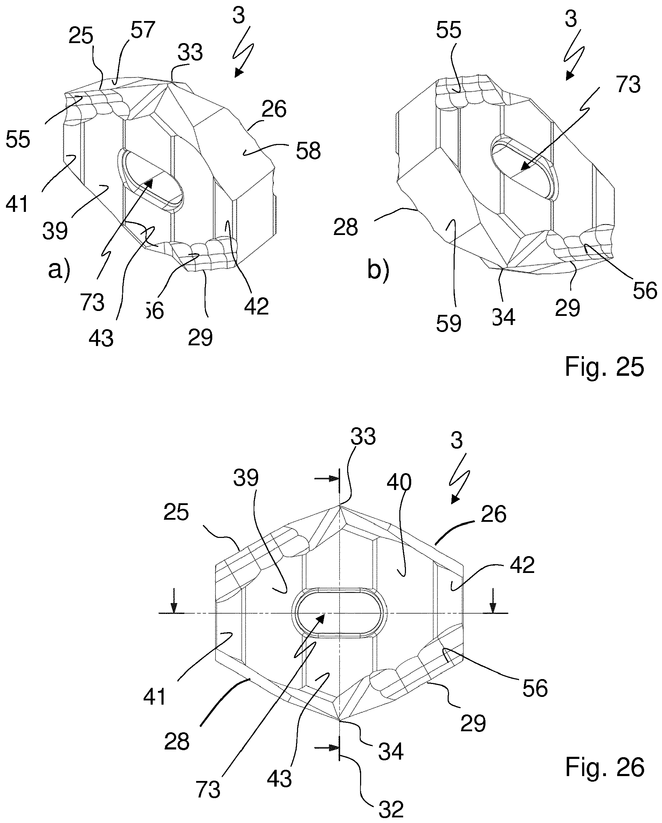

- Figure 25 a): is an isometric top view of the cutting insert of the drilling tool of Figures 20 to 24.
- Figure 25 b): is an isometric bottom view of the cutting insert of Figure 25 a)
- Figure 26: is a side view of the top surface of the cutting insert of Figures 25 a) and 25 b).

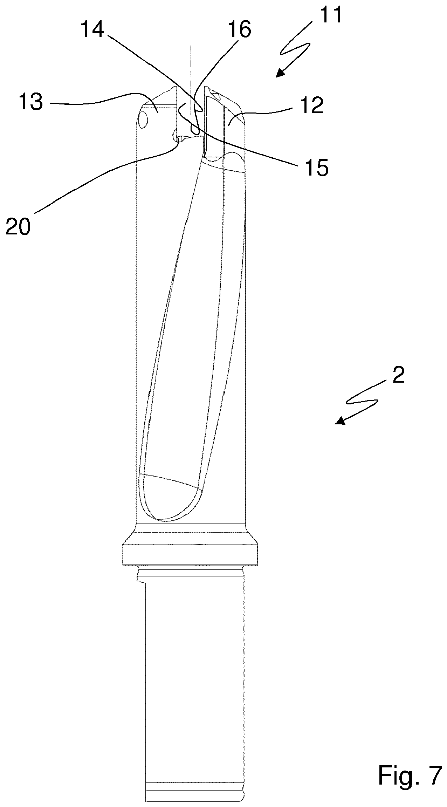

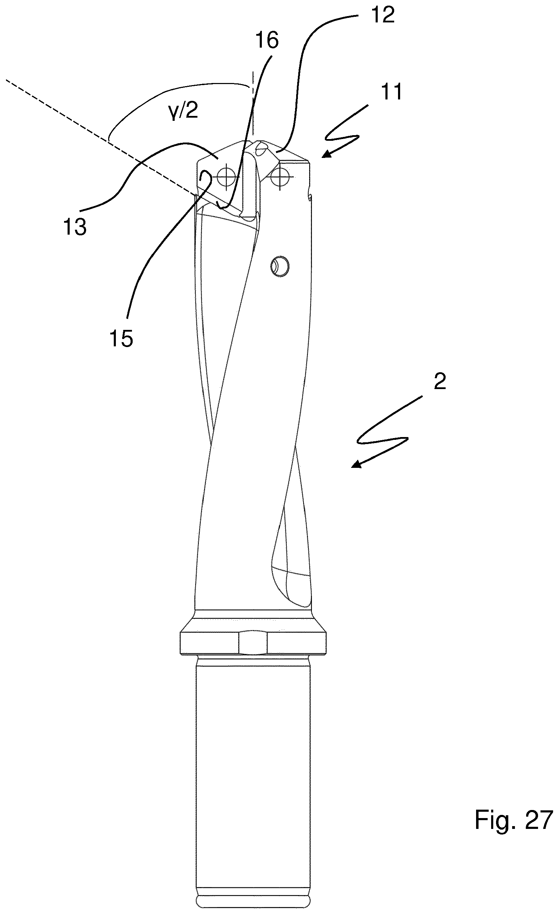

- Figure 27: is a side view of the tool body of the drilling tool of Figure 7 rotated by 90°.

### DETAILED DESCRIPTION

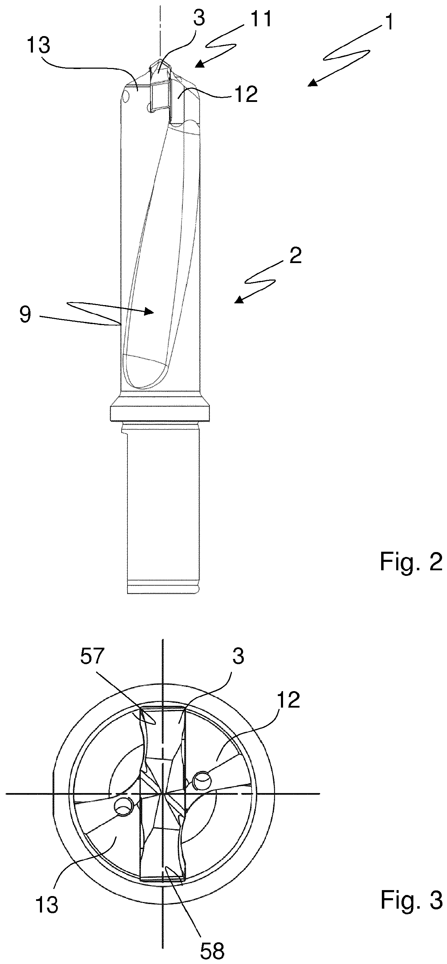

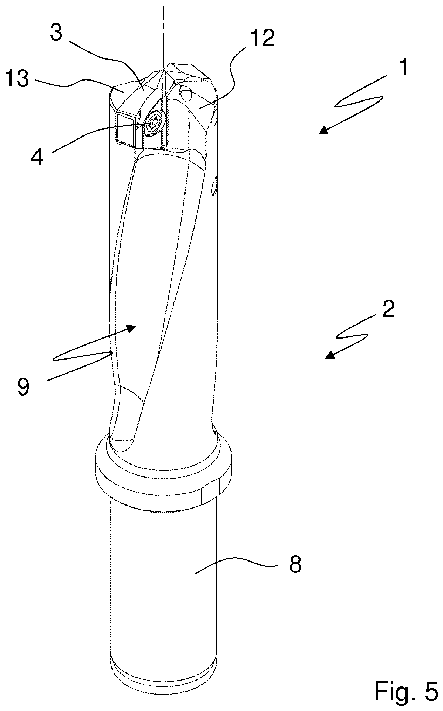

Figures 1 to 6 visualize a first embodiment of a drilling tool 1 according to the present disclosure. The drilling tool 1 comprises a tool body 2, a cutting insert 3 as well as two mounting screws 4. Figures 1 to 5 illustrate the drilling tool 1 with the cutting insert 3 is mounted in a jaw 11 and received in an insert seat at a second end 7 of a shaft 6 of the tool body 2. The cutting insert 3 is securely mounted in the insert seat by the two mounting screws 4. At a first end 5, the shaft 6 of the tool body 2 comprises a mounting section 8 for connecting the tool body 2 to a chuck on a spindle of a machine tool.

The tool body 2 comprises two chip flutes 9, 10 extending in the axial direction in the shaft 6. At the second end 7 of the tool body 2, the chip flutes 9, 10 end in the insert seat. At the second end 7 of the shaft 6, the chip flutes 9, 10 are continued by chip spaces 50, 51. These chip spaces 50, 51 are formed by cooperating surfaces of the shaft 6, of the cutting insert 3 as well as of the mounting screws 4. In addition, a curved surface of the driver arms ca be considered as part of the chip space 50, 52.

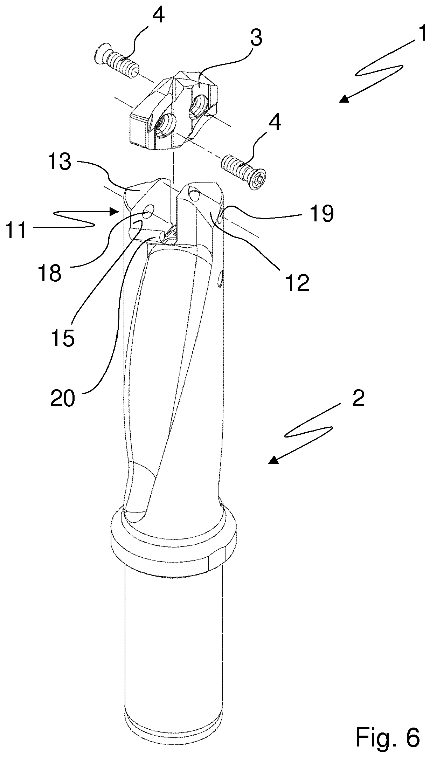

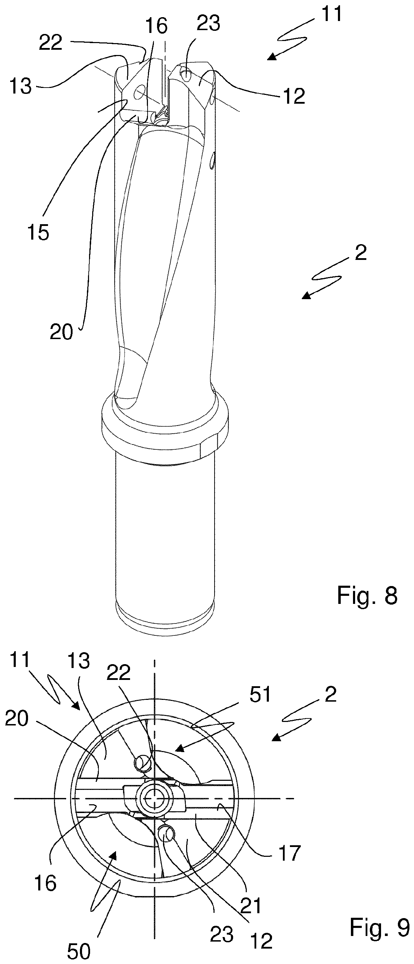

According to the present disclosure, the insert seat at the second end 7 of the shaft 6 is formed as a jaw 11 comprising two driver arms 12, 13. The design of the jaw 11 can best be understood with reference to the exploded view of Figure 6 and with reference to Figures 7 and 8 showing the tool body 2.

Each of the driver arms 12, 13 comprises a torque transferring abutment surface, wherein a first torque transferring abutment surface 14 is provided on the first driver arm 12 and a second torque transferring abutment surface 15 is provided on the second driver arm 13. The torque transferring abutment surfaces 14, 15 are denoted as torque transferring abutment surfaces as they provide support for the cutting insert 3 in a circumferential direction and thus transfer torque from the spindle of the machine tool via the tool body 2 to the cutting insert 3.

In addition, the jaw 11 of the tool body 2 comprises two axial abutment surfaces 16, 17, which, in particular, are visible in the top view of the tool body 2 shown in Figure 9. These axial abutment surfaces 16, 17 provide axial support for the cutting insert. The axial abutment surfaces 16, 17 are designed to receive any axial forces, i.e. any forces having a component in the axial direction of the tool body 2.

The cutting insert 3 is fixedly secured in the jaw 11 of the tool body 2 by the two mounting screws 4. In order to receive the mounting screws 4, each the driver arm 12, 13 has a threaded hole 18, 19. The threads of the threaded holes 18, 19 match the threads of the mounting screws 4. In the embodiment depicted in Figures 1 to 14, the threaded holes 18, 19 are provided in the torque transferring abutment surfaces 18, 19 of the driver arms 12, 13.

The cutting insert 3 is an indexable cutting insert comprising a first pair 24 of main cutting edges 25, 26 and a second pair 27 of main cutting edges 28, 29. The two pairs 24, 27 of main cutting edges 25, 26, 28, 29 can be selectively brought into engagement with a workpiece depending on the orientation of the insert 3 when mounted in the jaw 11.

At the transition between each of the torque transferring abutment surfaces 14, 15 and the adjacent axial abutment surfaces 16, 17, a relief 20, 21 is provided. When the cutting insert 3 is mounted in the jaw 11 of the tool body 2, this relief 20, 21 ensures that there is a distance between the tool body 2 and a main cutting edge of the cutting insert 3. When the cutting insert 3 is received in the jaw 11 of the tool body 2, the inactive main cutting edges, i.e. the main cutting edges that are not in engagement with a workpiece, are protected by the reliefs 20, 21 against damages.

Furthermore, the tool body 2 comprises cooling ducts for a guiding cooling liquid towards the active cutting edges. The cooling ducts 22, 23 terminate at the front ends of the first and second driver arms 12, 13.

In the following, the geometry of the cutting insert 3 is described in further detail, mainly with reference to Figures 10 to 15, whereas the full functionality of the insert 3 can be understood by also taking into consideration Figures 1 to 9. Figures 1 to 6 and 10 to 15 illustrate a first embodiment of a cutting insert 3 according to the present disclosure.

The cutting insert 3 is generally defined by a top surface 30, a bottom surface 31 and circumferential surfaces extending between the top surface 30 and the bottom surface 31. The circumferential surfaces provide multiple functionalities and their different sections denoted by individual reference numbers will be described below with reference to the Figures.

Furthermore, the cutting insert 3 has a central longitudinal axis 32 extending from a first center position 33 to a second center position 34. The cutting insert 3, in the longitudinal direction, has a pointed shape towards the first center position 33 and towards the second center position 34. The pointed shape towards the first 33 and second 34 center positions is well visible in each of Figures 10 to 12. Each of the two cutting edges 25, 26, 28, 29 of each pair of cutting edges 24, 27 extends from the respective center position 33, 34 radially outwardly to a cutting corner 35, 36, 37, 38. The radial distance to each of the cutting corners 35, 36, 37, 38 from the central longitudinal axis 32 defines the nominal radius of the cutting insert 3 and thus of the drilling tool 1.

Each of the radial outer contact surfaces 41, 42, 46, 47 and each of the radially inner contact surfaces 43, 48 is planar. In the shown embodiment, all the radially outer contact surfaces and all the radially inner contact surfaces are parallel to each other. In fact, the two radially outer contact surfaces 41, 42 and the radially inner contact surface 43 of the top surface 30 are arranged in a common plane. Likewise, the two radially outer contact surfaces 46, 47 and the radially inner contact surface 48 of the bottom surface 31 are arranged in a common plane.

The cutting insert 3 has a twofold, or 180°, symmetry around three axes of symmetry. A first 180°, or twofold, rotational symmetry is provided about a first axis of symmetry 61, which first axis of symmetry 61 extends through a center of the top surface 30 and through a center of the bottom surface 31 and which is normal to the top surface 30 and to the bottom surface 31, and thus, to the central plane. The central plane includes the central longitudinal axis 32 and is located half way between the top surface 30 and the bottom surface 31. The central plane is parallel to the radially inner and outer contact surfaces on the top surface 30 and on the bottom surface 31.

A further twofold symmetry is provided around the central longitudinal axis 32.

A second axis of symmetry 68 is perpendicular to the first axis of symmetry 61 as well as to the central longitudinal axis 32. The cutting insert 3 has a twofold symmetry also about this second axis of symmetry 68.

The central longitudinal axis 32 and the second axis of symmetry 68 are both in the central plane of the cutting insert 3.

The top surface 30 of the cutting insert 3 has two concave chip transferring depressions 39, 40, which each extend between a radially outer contact surface 41, 42 and a radially inner contact surface 43. Likewise, the bottom surface 31 comprises two concave chip transferring depressions 44, 45. Each of the two chip transferring depressions 44, 45 on the bottom surface 31 extends between a radially outer contact surface 46, 47 and a radially inner contact surface 48. The design of the top surface 30 and the bottom surface 31 is best understood with reference to the side view of Figure 12, the top view of Figure 13 and the cross-sectional view of Figure 14.

During operation of the drilling tool 1, the chip transferring depressions 39, 40, 44, 45 define together with parts of the tool body 2 a chip space 50, 51, which improves transport or transfer of chips cut by the main cutting edges 25, 26, 28, 29 towards the chip flutes 9, 10 of the tool body 2. The radially inner contact surfaces 43, 48 and the radially outer contact surfaces 41, 42, 46, 47 are provided for allowing the cutting insert to be securely accommodated in the jaw 11 of the tool body 2.

The function of the individual surface sections of each of the top surface 30 and the bottom surface 31 are best understood with reference to the cross-sectional view of the cutting tool 1 along a line XV-XV in Figure 1, which is shown in Figure 15.

When the cutting insert 3 is mounted in the jaw 11, which includes the first driver arm 12 and the second driver arm 13, one of the radially outer contact surfaces 42 of the top surface 30 and the radially inner contact surface 43 of the top surface 30 are in engagement with the first torque transferring abutment surface 14 of the first driver arm 12. Likewise, one of the radially outer contact surfaces 46 of the bottom surface 31 and the radially inner contact surface 48 of the bottom surface 31 are in engagement with the second torque transferring abutment surface 15 of the second driver arm 13. At the same time, one of the chip transferring depressions 39 and the first radially outer contact surface 41 on the top surface 30 of the cutting insert 3 are exposed. Likewise, one of the chip transferring depressions 45 on the bottom surface 31 and the second radially outer contact surface 47 of the cutting insert 3 are exposed.

The radially inner contact surface 43 of the top surface 30 of the insert 3 extends slightly past the first torque transferring abutment surface 14 of the first driver arm 13 in a direction parallel to the radially inner contact surface 43 and radially outwards. Consequently, a short section 49 of the radially inner contact surface 43 is exposed, i.e. does not abut against the first torque transferring abutment surface 14. The same applies to the design of the radially inner contact surface 48 on the bottom surface of the cutting insert 3 as well as to the second torque transferring abutment surface 15 of the second driver arm 13. The short sections 49 of the radially inner contact surface 43, 48 on the top surface 30 and on the bottom surface 31 also define parts of the respective chip spaces 50, 51. Consequently, no spaces are present, which could trap chips or part of chips and thus have a detrimental effect on the chip transferring properties of the drilling tool 1.

In order to fixedly secure the cutting insert 3 in the jaw 11 of the tool body 2, the cutting insert 3 has two through holes 52, 53 extending through the cutting insert 3 from the top surface 30 to the bottom surface 31. One of the mounting screws 4 reaches through each of the two through holes 52, 53 and engages one of the threaded holes 18, 19 in the driver arms 12, 13. Each of the through holes 52, 53 is conically tapered from the top surface 13 and from the bottom surface 31. The conical surfaces of the through holes 52, 53 are tapered towards the central plane including the central longitudinal axis 32. When mounted, a conical head 54 of the mounting screw 4 is in engagement with the conical sidewalls of the through holes 52, 53.

The mountings screws 4, the through holes 52, 53 of the cutting insert 3 and the threaded holes 52, 53 are arranged and designed to push the cutting insert 3 in the axial direction towards the second end 7 of the shaft. When coming into engagement with the conically tapered section of the respective through hole 52, 53, each conical head 54 first engages a part of the conical section, which part is closest to the axial abutment surfaces of 16, 17 of the tool body 2. Thereby the cutting insert 3 is pushed in the axial direction. By this axial movement of the cutting insert 3, the axial surfaces 59, 60 are pressed against the complementary axial abutment surfaces 16, 17 of the tool body 2.It is possible to push the cutting insert 3 in the axial direction in this way due to that the through holes 52, 53 have a diameter which is slightly larger than the diameter of the mounting screws 4 at their threaded sections.

The mounting screws 4 and the cutting insert 3, in particular the through holes 52, 53 of the cutting insert 3, are further arranged such that the heads 54 of the screws 4, when tightened, do not project beyond the top surface 30 or beyond the bottom surface 31. The top surface of the head 54 is located below the surface section of the cutting insert 3 that defines the chip transferring depressions 39, 40, 44, 45.

When seen in a side view like the one of Figure 11, it is visible that both through holes 52, 53 are long holes having a larger extension in a direction perpendicular to the central longitudinal axis 32 than in a direction parallel to the central longitudinal axis 32. Thereby, the cutting insert 3 may be self-centering when mounted in the jaw 11 of the tool body 2.

The self-centering function is achieved by the design of the circumferential surfaces. The main cutting edges 25, 26, 28, 29 are each partly formed at an intersection between a chip forming recess 55, 56, which is part of a chip surface on the top surface or bottom surface, and an axial surface 57, 58, 59, 60. These axial surfaces 57, 58, 59, 60 form axial abutment surfaces when the corresponding main cutting edge 25, 26, 28, 29 is in an inactive position. Thus, when the main cutting edge is in an inactive position, the corresponding axial contact surface is in engagement with one of the axial abutment surfaces 16, 17 of the jaw 11 of the tool body 2. When seen in a side view, for example the side view of Figure 11, the axial surfaces 57, 58 and 59, 60 on each side of the cutting insert 3 have the shape of a rooftop, which shape is complementary to the design of the corresponding axial abutment surfaces 16, 17 of the jaw 11 of the tool body 2. The axial abutment surfaces 16, 17 of the tool body form an angle γ of 120° between them. The angle γ is measured as the angle between the lines of intersection of the axial abutment surfaces with the central plane. The angle between the lie of intersection of one axial abutment surfaces with the central longitudinal axis half of the angle γ and is visible in Figure 27 as γ/2.

When the axial contact surfaces 57, 58 or 59, 60 of the cutting insert 3 are brought into engagement with the axial abutment surfaces 16, 17 of the jaw 11, they act to self-center the cutting insert such that the central longitudinal axis 32 of the cutting insert coincides with the longitudinal axis of the tool body 2, i.e. the axis of rotation of the drilling tool 1. Due to the through holes 52, 53 being long holes, the cutting insert 3 has a radial play with respect to the mounting screws 4 and can thus assume a centered position in the tool body before the screws 4 are tightened.

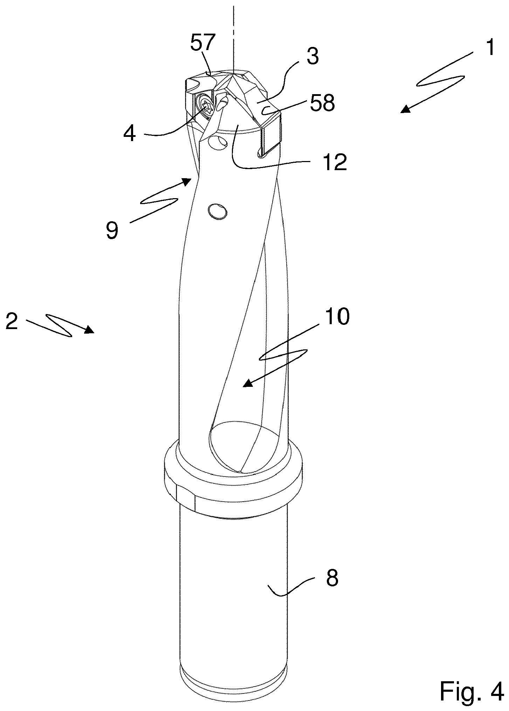

The axial surface 57, 58, 59, 60 forms an axial clearance surface when the adjacent main cutting edge 25, 26, 28, 29 is in an active position, i.e. is to be brought into engagement with a workpiece in order to carry out a drilling operation. In the index position of the cutting insert shown in Figure 4, the axial surfaces 57, 58 form the axial clearance surfaces of the cutting insert 3. Although in some operations a clearance surface with a large clearance angle can be beneficial, a large clearance angle would be detrimental when the axial surface 57, 58, 59, 60 is in engagement with a corresponding axial abutment surface 16, 17 of the tool body 2. Consequently, in the embodiment of the cutting insert 3 depicted in Figures 1 to 15, the axial clearance surface 57, 58, 59, 60 forms an angle β with the central plane of 79° (see Figure 12) when the angle β is measured in a plane perpendicular to the central plane.

As mentioned above, the cutting corners 35, 36, 37, 38 define the nominal radius of the cutting insert 3 and thus of the drilling tool 1 when the cutting insert 3 is mounted in the tool body 2. To avoid interference of the cutting insert 3 with the workpiece, any other part of the cutting insert 3 should not have a radial distance from the central longitudinal axis 32 which is larger than the nominal radius. The circumferential surfaces comprise a first radial surface 62 and a second radial surface 63, which, on a respective radial side of the cutting insert 3, extend from the cutting corner 35, 36 of one of the main cutting edges 25, 26 in the first pair of main cutting edges 24 to the cutting corner 37, 38 of one of the main cutting edges 28, 29 in the second pair of main cutting edges 27.

In the embodiment shown in Figures 1 to 15, a major part of the first and second radial surfaces 62, 63 is a planar surface having a radial distance from the central longitudinal axis 32 which is smaller than the nominal radius of the cutting insert 3. It can also be seen, in particular with reference to Figures 10, 12, 13 and 14, that each of the first and second radial surfaces 62, 63 has two chamfers 64, 65, 66, 67 along an intersection of the respective radial surface 62, 63 with the top surface 30 and the bottom surface 31.

The chamfers 64, 65, 66, 67 have a curved surface with the central longitudinal axis 32 as center of curvature. A radius of curvature is equal to the nominal radius of the cutting insert. Thereby, the cutting insert is supported by the chamfers 64, 65, 66, 67 sliding against the wall of the drilled hole.

In the embodiment depicted in Figures 1 to 15, the cutting insert 3 has a chip forming recess being part of the chip surface of the cutting insert 3. In the Figures, the chip forming recess is denoted by reference signs 55, 56. A chip forming recess 55, 56 is provided in the top surface 30 or in the bottom surface 31 for each main cutting edge 25, 26, 28, 29, wherein the chip forming recess 55, 56, along a first side, is delimited by the respective main cutting edge 25, 26, 28, 29 and, along a second side, is at least partly delimited by the radially outer contact surface 41, 42, 46, 47 and the corresponding chip transferring depression 39, 40, 44, 45. The chip forming recess serves to shape the chips that has been cut by the main cutting edges 25, 26, 28, 29 and possibly to break the chips into shorter pieces. In the embodiment depicted in Figures 1 to 15, a chip breaking step 80, 81 is provided at the intersection between the chip forming recess 55, 56 and the adjacent outer contact surface 41, 42, 46, 47 and the chip forming recess 39, 40, 44, 45.

Figures 16 and 17 illustrate an alternative embodiment of a cutting insert 3.

The cutting insert 3 according to this alternative embodiment, can be mounted in the tool body 2 of Figures 1 to 9 and replace the cutting insert 3 according to the embodiment of Figures 10 to 14.

The cutting insert 3 of Figures 16 and 17 differs from the cutting insert 3 of Figures 1 to 15 in that the chip forming recesses 55, 56 have an undulated surface structure with chip breaking protrusions 69, 70. A first type of chip breaking protrusions 70 extend from the respective cutting edge 25, 29 towards the radially outer contact surfaces 41, 42 and towards the chip transferring depressions 39, 40. In contrast, a second type of chip breaking projections 69 essentially follow the direction of their corresponding cutting edge 25, 29. The chip breaking protrusions enhance shaping and breaking of chips cut by the respective main cutting edges 25, 29.

The following considerations are best understood with reference to the side view of the cutting insert 3 of Figure 11. In this embodiment of the cutting insert 3, each of the two chip transferring depressions 39, 40 is delimited by one radially outer contact surface 41, 42 and the radially inner contact surface 43. The line of intersection between the radially outer contact surface 41 and the chip transferring depression 39 is parallel to the central longitudinal axis 32 and thus the line of intersection forms an angle with the central longitudinal axis of 0°. The same applies for each lines of intersection between a radially outer contact surface 42, 46, 47 and the chip transferring depressions 40, 44, 45. Likewise, the lines of intersections between the radially inner contact surface 43 and each of the adjacent chip transferring depressions 39, 40 on the front surface 13 are parallel to the central longitudinal axis 32 and thus these intersections form an angle of 0° with the central longitudinal axis 32, too. Consequently, the extension of limiting lines of the chip transferring depressions 39, 40, 44, 45 can be described as parallel to the central longitudinal axis 32. This embodiment achieves an optimized surface area of the radially outer contact surfaces 41, 42, 44, 45.

However, alternative axial extensions of the limiting lines of the chip transferring depressions are feasible, such as in the embodiment of Figures 18 and 19. In Figures 18 and 19, elements which correspond to or are identical to elements of the cutting insert 3 of Figures 1 to 15 have been denoted by identical reference numbers.

In this embodiment, each chip transferring depressions 39, 40 is diverging from the respective cutting edge 25, 29 in the longitudinal direction. Thereby, the chip transferring properties of the chip transferring depressions 39, 40 are enhanced. Consequently, when projected onto the central plane, the line of intersection between a radially outer contact surface 41, 42 and the adjacent chip transferring depression 39, 40 forms an angle α with the central longitudinal axis of 3°. Likewise, the line of intersection between each of the chip transferring depressions 39, 40 and the radially inner contact surface 43, when projected onto the central plane, also forms an angle with the central longitudinal axis 32 of 3°.

Figures 20 to 26 illustrate an alternative embodiment of a drilling tool 1, wherein the tool body 2 as well as the cutting insert 3 have different designs for accomplishing the secure fixing of the cutting insert 3 in the jaw 11 of the tool body 2. In Figures 20 to 26 elements being identical to elements described before with reference to Figures 1 to 15 have been denoted by identical reference numbers.

Instead of fixing the cutting insert against the driver arms by two mounting screws, the embodiment according to Figures 20 to 26 relies on clamping of the cutting insert 3 between the two driver arms 12, 13. A clamping screw 71 reaches through a through hole 72 in the first driver arm 12, through a central through hole 73 in the cutting insert 3 and engages a threaded hole in the second driver arm 13. When tightened, the clamping screw 71 presses the two driver arms slightly towards each other such that the first and second abutment surfaces are pressed against the respective radially inner and outer contact surfaces 41, 42, 43.

The clamping mechanism is best understood with reference to the cross-sectional view along line XXIV-XXIV of Figure 22 as shown in Figure 24. In order to enable clamping of the cutting insert 3 between the first and second driver arms 12, 13, the clamping screw 71 reaches through a central long hole 73 in the cutting insert 3. When the cutting insert 3 is mounted in the jaw 11 of the tool body 2, the clamping screw 71 forms an angle with respect to the first and second abutment surfaces 14, 15, with respect to the radially outer contact surfaces 41, 42, 46, 47 as well as with respect to the radially inner contact surfaces 43 of 55°. Except for the through hole 73, the cutting insert 3 has a design that corresponds to the design of the cutting insert 3 of Figures 16 and 17.

The clamping screw 71, the through hole 72 in the first driver arm 12, the threaded hole in the second driver arm 13 as well as the central long hole 73 in the cutting insert 3 are arranged and designed such that the clamping screw 71, when tightened, pushes the cutting insert 3 in the axial direction towards the axial abutment surfaces 16, 17 of the tool body 2. When engaging a conically tapered section of the through hole 72 in the first driver arm 12, a conical head of the clamping screw 71 first contacts a part of this conically tapered section, which part is furthest away from the axial abutment surfaces 16, 17. Thereby, the clamping screw is bent in the axial direction towards the axial abutment surfaces 16, 17 of the tool body 2. When bent, also the threaded potion of the clamping screw 71 pushes the cutting insert 3 in the axial direction. By this axial movement of the cutting insert 3', the axial surfaces 59, 60 of the cutting insert 3 are pressed against the complementary axial abutment surfaces 16, 17 of the tool body 2.

It is noted that features described in connection with one embodiment also can be used in other embodiments as is readily understandable by a person skilled in the art.

While the disclosure has been described in in detail and with reference to the Figures, this description is only an example and is not considered to restrict the scope of protection as it is defined by the claims.

In the claims, the word "comprising" does not exclude other elements or steps and the undefined article "a" does not exclude a plurality. The mere fact that some features have been claimed in different claims does not exclude their combination. Reference numbers in the claims are not considered to restrict the scope of protection.

### LIST OF REFERENCE NUMBERS

- 1: drilling tool
- 2: tool body
- 3: cutting insert
- 4: mounting screw
- 5: first end of the shaft
- 6: shaft
- 7: second end of the shaft
- 8: mounting section
- 9, 10: chip flute
- 11: jaw
- 12, 13: driver arm
- 14: first torque transferring abutment surface
- 15: second torque transferring abutment surface
- 16, 17: axial abutment surface
- 18, 19: threaded hole
- 20, 21: relief
- 22, 23: cooling duct
- 24: first pair of main cutting edges
- 25, 26, 28, 29: main cutting edge
- 27: second pair of main cutting edges
- 30: top surface
- 31: bottom surface
- 32: central longitudinal axis
- 33: first center position
- 34: second center position
- 35, 36, 37, 38: cutting corner
- 39, 40, 44, 45: chip transferring depression
- 41, 42, 46, 47: radially outer contact surface
- 43, 48: radially inner contact surface
- 49: short section
- 50, 51: chip space
- 52, 53: through hole
- 54: screw head
- 55, 56: chip forming recess
- 57, 58, 59, 60: axial surface
- 61: first axis of symmetry
- 62: first radial surface
- 63: second radial surface
- 64, 65, 66, 67: chamfers
- 68: second axis of symmetry
- 69, 70: chip breaking protrusion
- 71: clamping screw
- 72: through hole
- 73: central long hole
- 80, 81: chip breaking step

## Claims

1. An indexable cutting insert (3) for mounting in a jaw (11) of a tool body (2) of a drilling tool (1), which jaw (11) comprises two driver arms (12, 13),
the cutting insert (3) being generally defined by
a top surface (30),
a bottom surface (31), and
circumferential surfaces extending between the top surface (30) and the bottom surface (31),
the cutting insert (3) comprising
a central longitudinal axis (32) extending from a first centre position (33) to a second centre position (34), wherein the cutting insert (3), in the longitudinal direction, has a pointed shape towards the first centre position (33) and towards the second centre position (34),
a first pair (24) of main cutting edges (25, 26, 28, 29), which extends from the fist centre position (33) in opposite radial directions to a cutting corner (35, 36, 37, 38) at a peripheral position of the cutting insert (3), and
a second pair (27) of main cutting edges (25, 26, 28, 29), which extends from the second centre position (34) in opposite radial directions to a cutting corner (35, 36, 37, 38) at a peripheral position of the cutting insert (3),
**characterized in that**
the top surface (30) and the bottom surface (31) each comprise
- two concave chip transferring depressions (39, 40, 44, 45),
- two radially outer contact surfaces (41, 42, 46, 47) and
- a radially inner contact surface (43, 48),
wherein
- each of the chip transferring depressions (39, 40, 44, 45) is delimited by an adjacent radially inner contact surface (43, 48) and an adjacent radially outer contact surface (41, 42, 46, 47),
- the radially outer contact surfaces (41, 42, 46, 47) and the radially inner contact surfaces (43, 48) are arranged for, when the cutting insert (3) is mounted in the drilling tool (1), supporting the cutting insert (3) in a circumferential direction against the driver arms (12, 13), and
- the first pair (24) of main cutting edges (25, 26, 28, 29), the second pair (27) of main cutting edges (25, 26, 28, 29), the radially outer contact surfaces (41, 42, 46, 47) and the radially inner contact surfaces (43, 48) are arranged such that the cutting insert is mountable in two different index positions in the jaw (11), wherein, in each index position, either the first or the second pair (24, 27) of main cutting edges (25, 26, 28, 29) is in a cutting position.

2. The indexable cutting insert (3) according to the previous claim, wherein each of the radially outer contact surfaces (41, 42, 46, 47) and each of the radially inner contact surfaces (43, 48) is planar.

3. The indexable cutting insert (3) according to anyone of the previous claims, wherein all of the radially outer contact surfaces (41, 42, 46, 47) and all of the radially inner contact surfaces (43, 48) are parallel to each other.

4. The indexable cutting insert (3) according to claim 2, wherein a line of intersection between a radially outer contact surface (41, 42, 46, 47) and an adjacent chip transferring depression (39, 40, 44, 45), when projected onto a central plane including the central longitudinal axis, forms an angle (α) with the central longitudinal axis in a range from 0° to 5°.

5. The indexable cutting insert (3) according to anyone of the previous claims, wherein the cutting insert (1) has a first 180° rotational symmetry about a first axis of symmetry (61), which first axis of symmetry (61) is normal to a central plane including the central longitudinal axis (32) and intersects the central longitudinal axis half way between the fist centre position (33) and the second centre position (34), and wherein the cutting insert (1) has a second 180° rotational symmetry about the central longitudinal axis (32), so that the cutting insert (1) is indexable to bring either the first pair (5) of main cutting edges (6, 7) or the second pair (8) of main cutting edges (9, 10) into the cutting position.

6. The indexable cutting insert (3) according to anyone of the previous claims, wherein each of the main cutting edges (25, 26, 28, 29) is at least partly formed at an intersection between a chip surface and an axial surface (57, 58, 59, 60), which axial surface (57, 58, 59, 60) forms an axial clearance surface when the main cutting edge (25, 26, 28, 29) is in the cutting position and forms an axial contact surface when the main cutting edge (25, 26, 28, 29) is in an inactive position.

7. The indexable cutting insert (3) according to the previous claim, wherein the axial clearance surface is a planar surface, wherein the plane of the axial clearance surface forms an angle (β) with the central plane including the central longitudinal axis (32) in a range from 75° to 82°, wherein the angle (β) is measured in a plane perpendicular to the central plane.

8. The indexable cutting insert (3) according to anyone of the previous claims, wherein a chip forming recess (55, 56, 155, 156) is provided in the top surface (30) or in the bottom surface (31) for each main cutting edge (25, 26, 28, 29), wherein the chip forming recess (55, 56, 155, 156) extends along the main cutting edge (25, 26, 28, 29), wherein the chip forming recess (55, 56, 155, 156) along a first side is delimited by the main cutting edge and along a second side is delimited at least partly by the radially outer contact surface (41, 42, 46, 47) and the chip transferring depression (39, 40, 44, 45).

9. The indexable cutting insert (3) according to the previous claim,
wherein a radial distance between each of the cutting corners (35, 36, 37, 38) and the central longitudinal axis (32) defines a nominal radius of the cutting insert (3), wherein the circumferential surfaces comprise a first radial surface (62) and a second radial surface (63), which, on a respective radial side of the cutting insert (3), extend from the cutting corner (35, 36, 37, 38) of one of the main cutting edges (25, 26, 28, 29) in the first pair of main cutting edges (25, 26, 28, 29) to the cutting corner (35, 36, 37, 38) of one of the main cutting edges (25, 26, 28, 29) in the second pair of main cutting edges,
wherein each of the radial surfaces (62, 63) comprises a chamfer (64, 65, 66, 67) at each of their connections with the top surface (30) and the bottom surface (31), so that any point on the radial surface has a radial distance from the longitudinal axis equal to or smaller than the nominal radius.

10. The indexable cutting insert (3) according to anyone of the previous claims, wherein the indexable cutting insert (3) has at least one through hole (52, 53) for mounting the indexable cutting insert (3) at a tool body (2), the through hole extending through the top surface (30) and the bottom surface (31).

11. The indexable cutting insert (3) according to the previous claim, wherein cutting insert has two through holes (52, 53) formed as long holes, wherein each of the long holes extends between a chip transferring depression (39, 40, 44, 45) on the top surface (30) and a chip transferring depression (39, 40, 44, 45) on the bottom surface (31).

12. A tool body (2) of a drilling tool (1) having an axis of rotation, the tool body (2) comprising a shaft (6) connecting a first end (5) and a second end (7) and comprising two chip flutes (9, 10),
a mounting section (8) at the first end (5) of the shaft (6) for connecting the tool body (2) to a spindle of a machine tool, and
a jaw (11) at the second end (7) of the shaft for accommodating an indexable cutting insert (3),
**characterized in that**
the chip flutes (9, 10) extend to the jaw (11),
wherein the jaw (11) comprises a first driver arm (12) and a second driver arm (13), wherein the jaw (11) has at least a first torque transferring abutment surface (14) and a second torque transferring abutment surface (15) for abutting contact surfaces (43, 48) of an indexable cutting insert (3),
wherein the first torque transferring abutment surface (14) is a surface of the first driver arm (12),
wherein the second torque transferring abutment surface (15) is a surface of the second driver arm (13),
wherein the first torque transferring abutment surface (14) and the second torque transferring abutment surface extend parallel to the axis of rotation, and
wherein the first torque transferring abutment surface (14) and the second torque transferring abutment surface (15) have surface normals pointing in opposite directions for supporting the contact surfaces (43, 48) of the cutting insert (3) in a circumferential direction.

13. The tool body (2) according to the previous claim, wherein the jaw (11) comprises two axial abutment surfaces (16, 17), wherein the two axial abutment surfaces are rotationally symmetrical about the axis of rotation, and wherein the two axial abutment surfaces (16, 17) form an angle (γ) smaller than 180°.

14. A drilling tool (1) comprising
the indexable cutting insert (3) according to any one of claims 1 to 11, and
the tool body (2) according to claims 12 or 13,
wherein the cutting insert (3) is mounted in the jaw (11) of the tool body (2), wherein the first torque transferring abutment surface (14) of the jaw (11) is in engagement with one of the two radially outer contact surfaces (41, 42, 46, 47) and with the radially inner contact surface (43, 48) of the top surface (30) of the cutting insert (3), and
wherein the second torque transferring abutment surface (15) of the jaw (11) is in engagement with one of the two radially outer contact surfaces (41, 42, 46, 47) and with the radially inner contact surface (43, 48) of the bottom surface (31) of the cutting insert (3).

15. The drilling tool (1) according to the previous claim, wherein at least a chip flute (9, 10), a chip transferring depression (39, 40, 44, 45) and a radially outer contact surface (41, 42, 46, 47) of the top surface (30) together define a first chip space (50) and wherein at least a chip flute (9, 10), a chip transferring depression (39, 40, 44, 45) and a radially outer contact surface (41, 42, 46, 47) on the bottom surface (31) together define a second chip space (51).

16. The drilling tool (1) according to the previous claim, wherein the radially inner contact surface (43, 48) on the top surface (30) of the cutting insert (3) extends beyond the first torque transferring abutment surface (14) of the tool body (2) so that a part of the radially inner contact surface (43, 48) defines the first chip space (50), and wherein the radially inner contact surface (43, 48) on the bottom surface (31) of the cutting insert (3) extends beyond the second torque transferring abutment surface (15) of the tool body (2) so that a part of the radially inner contact surface (43, 48) defines the second chip space (52).
